# EUROPEAN PATENT APPLICATION

(11) **EP 1 649 811 A1**
(43) Date of publication of application: **26.04.2006**
(21) Application number: 04770930.8
(22) Date of filing: 26.07.2004
(51) Int. Cl.: A61B 6/03

(54) **IMAGE PROCESSING METHOD AND COMPUTER-READABLE RECORDING MEDIUM CONTAINING IMAGE PROCESSING PROGRAM**

(30) Priority: 24.07.2003 JP 2003201423
(71) Applicant: Nihon University, Tokyo 102-8275 (JP); Matsumoto Dental University, Nagano 399-0781 (JP); J. Morita Manufacturing Corporation, Kyoto-Shi, Kyoto 612-8533 (JP)
(72) Inventor: TSUNASHIMA, Hitoshi, c/o NIHON UNIVERSITY, Tokyo 102-8275 (JP); YAMADA, Ayuta, c/o NIHON UNIVERSITY, Tokyo 102-8275 (JP); ARAI, Yoshinori, c/o Department of Oral Radiology, Shiojiri-Shi, Nagano (JP)
(74) Representative: Rees, Alexander Ellison
(86) International application number: PCT/JP2004/010619
(87) International publication number: WO 2005/009241

(57) **Abstract**

An image processing method for processing 3-dimensional CT data obtained from a 3-dimensional object composed of a single block is provided. The image processing method includes: a start point setting step of setting a start point of continuity in the 3-dimensional CT data to the single block; and a continuity detecting step of detecting the 3-dimensional CT data having continuity with the start point set in the start point setting step. The 3-dimensional CT data are rearranged based on the 3-dimensional CT data having the continuity detected in the continuity detecting step.

## Description

### TECHNICAL FIELD

The present invention relates to an image processing method, and a computer-readable recording medium in which an image processing program is recorded.

### BACKGROUND ART

In the medical field, the diagnosis using a tomographic image obtained through CT (Computed Tomography) or MRI (Magnetic Resonance Imaging) is commonly performed. With the development of computer hardware technology in recent years, it becomes easy to generate a 3-dimensional image from a tomographic image, and exact and objective grasping of a position and configuration of the affected part is possible. In addition, recently, many researches on a cutting of a splinter of bone, a synthetic simulation and a distance measurement of a skin incision part have been carried out by using the 3-dimensional image.

In the field of dentistry, the CT for medical use has so far been diverted, but it cannot be the that the CT for medical use is optimal for dentistry, from the standpoints of the device scale, the resolution of the image and so on.

To resolve the problem, a 3DX Multi Image Micro CT (which is hereinafter called 3DX device) has been developed by Arai Y et al in the radiology group of the department of dentistry of the Nihon University. See the following documents.
- Arai Y, Honda K, Iwai K et al: "Practical Model "3DX" of Limited Cone-Beam X-ray CT for Dental Use", CARS2001, 2001, pp.671-675.
- "Basic Performance of Practical Model "3DX Multi Image Micro CT" of Limited Cone-Beam X-ray CT", Dental Radiology 2000, 40(2), 2000, pp. 145-154.

The photographic area of the 3DX device can be local and the 3DX device itself is configured to reduce the quantity of X-ray radiation as low as possible, and the X-ray exposed dose is reduced with the whole 3DX device.

The range of optical density in the photography area is quantized so that it may be expressed by 256 gradation levels. When compared with the conventional CT data, the 3-dimensional projection data obtained by using the 3DX device have high resolution. It is possible to display a 3-dimensional tomographic image from an arbitrary direction. Detailed observation of a hard tissue of a jawbone or an internal ear which was conventionally difficult to be carried out is also possible. Thereby, the effectiveness in the hard tissue diagnosis in the fields of otolaryngology and dentistry is confirmed.

By using the 3DX device, the present inventors have developed an image processing method which generates a tomographic image by developing a 3-dimensional projection data, obtained by the 3DX device, on two-dimensional images in multiple directions around the Z-axis (or the perpendicular line passing through the center of an object). After performing noise reduction and outline extraction of an object on the tomographic image, this image processing method performs rearrangement of the projection data in the 3-dimensional space. This technique takes into account the fact that the data obtained from the 3DX device are voxel data in the 3-dimensional space.

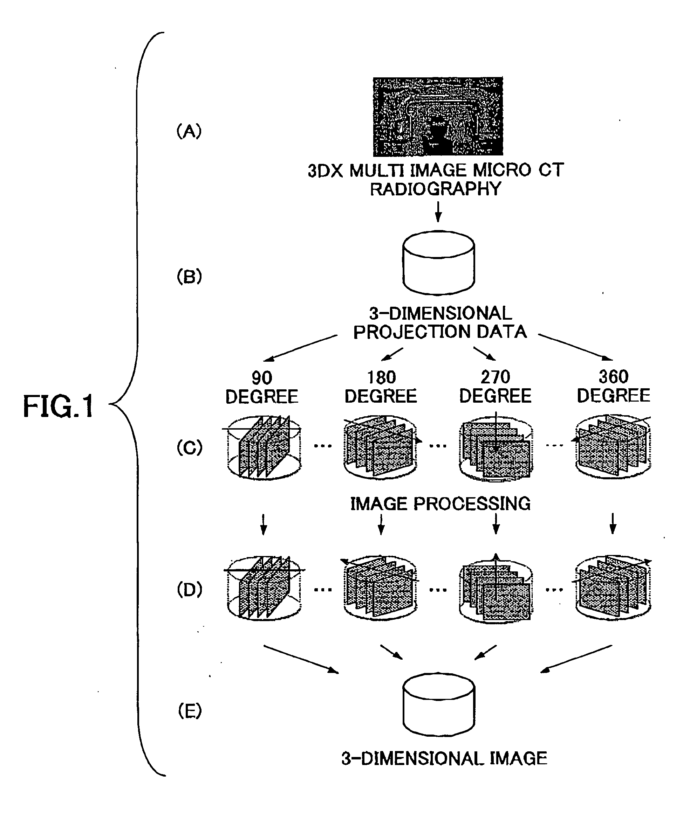

Next, the outline of the processing will be explained using FIG. 1.

### (Extraction of Images)

First, the 3DX device shown in FIG. 1 (A) is used to obtain the 3-dimensional projection data as shown in FIG. 1 (B), and two-dimensional images are extracted in the multiple directions around the Z-axis from the 3-dimensional projection data as shown in FIG. 1 (C). Extraction of images is the reverse algorithm to the method of generating a tomographic image. This extraction is not simply performed at intervals of 0.125 (one voxel) which are the spatial resolution, but the moving-average processing is performed in order to include the noise reduction processing, and the images are extracted so that each image becomes a single image with the average value of eight images in the depth direction of the extraction.

### (2-Dimensional Image Processing)

Next, noises are eliminated from the obtained original images. Since it is difficult to extract the object correctly by the simple binarization processing, the following processing which will be described below is performed and binarized outline images are obtained (FIG. 1 (D)).
(1) Contrast adjustment by density conversion
(2) Outline detection using the Gaussian filter
(3) Binarization
(4) Outline extraction by skipping processing

### (Reconstruction of 3-Dimensional Image)

The obtained outline images are rearranged in the 3-dimensional space for each of the respective directions in the reverse order of the directions in which the images are extracted in the 2-dimensional space, and the 3-dimensional image created for every direction is compounded in the 3-dimensional space (FIG. 1 (E)).

At this time, the object areas extracted for the respective directions are different, and the outline information on the missing object can also be interpolated from the image data processed for the other directions.

### (Multi-Axial Extraction)

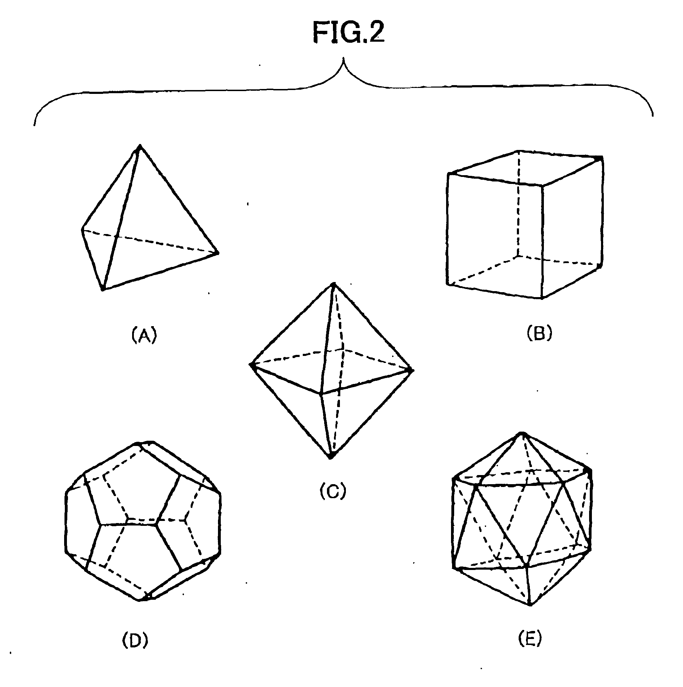

Apart from the manner in which two-dimensional images are extracted in the directions around the Z-axis from the 3-dimensional projection data as shown in FIG. 1 (C), there is another method of extraction of two-dimensional images. Namely, two-dimensional images may be extracted along the axes of the lines connecting together the center of each side of one of regular polyhedrons, including a regular tetrahedron (A), a regular hexahedron (B), a regular octahedron (C), a regular dodecahedron (D) and a regular icosahedron (E), shown in FIG. 2, and the center of the one of regular polyhedrons.

It has been confirmed until now that the diagnostic imaging of 5000 cases is performed using the 3DX device and they are effective.

On the other hand, the diagnosis using a 3-dimensional image is demanded for the advancement of dental treatment. The image obtained from the 3DX device has several noises because of its high resolution, and the binarization processing generally used for extraction of a bone area may result in a missing of the object surface and it was very difficult to obtain a 3-dimensional image with good quality of image. As the technique of restoring the missing or cut-off outline, there have been several methods are proposed, such as the method of interpolating the outline smoothly using the curvature of a lacking part or a dispersed point, the method of detecting the outline based on the human vision structure and subjective evaluation, and the interpolation method using the Hough transform. In the field of dentistry, the method of generating a traced drawing based on optimization has been reported.

In addition, Japanese Laid-Open Patent Application No. 2003-061956 discloses an ultrasonic diagnostic device which is configured to generate a high quality 3-dimensional image with a small amount of data. In this device, the volume data in the collection coordinates are divided along the surface defined based on a predetermined sight line direction to generate a plurality of slice data, an intermediate image corresponding to each of a plurality of sliced surfaces is calculated, and accumulation of the intermediate images is carried out so that a display image is generated.

In the cases of the above-mentioned techniques, the detection of a smooth continuation line is possible and their effectiveness is confirmed. However, it is assumed for all the above-mentioned techniques that a lacking part is estimated by using a certain method and it is interpolated by an artificial line.

To obviate the problem, the present inventors have proposed the new technique of extracting an image of an object from the CT data containing several noises and published the fundamental study on the effectiveness in the following documents:
- Befu S, Tsunashima H, Arai Y: "A Study on the 3-Dimensional Model Construction Using Ortho-CT", Institute of Electronics, Information and Communication Engineers Technical Research Report MI2000-75, 2001, pp.145-149
- Tsunashima H, Befu S, Arai Y "Stereoscopic Image Construction Method" (Japanese Patent Application No. 2000-358420), 2000
- Befu S, Tsunashima H, Arai Y: "A Study in 3-Dimensional Image Processing Method for 3 DX Multi Image Micro CT", CARS2001, 2001, pp.665-670
- Tsunashima H, Befu S, Yamada A, Arai Y: "3-Dimensional Image Construction Method In Small X-ray Calculated Tomography for Dental Use", Med. Imag. Tech. 21:157-165, 2003.

### DISCLOSURE OF THE INVENTION

However, as for the methods in the above-mentioned documents, it is found as a result of examining the reconstructed 3-dimensional image that separation of a mandibular condyle head and a mandibular fossa in the reconstructed 3-dimensional image of a mandible part is not performed adequately.

Accordingly, a general object of the present invention is to provide an image processing method in which the above-mentioned problems are eliminated.

A more specific object of the present invention is to provide an image processing method and a computer-readable recording medium in which an image processing program is recorded which is capable of performing separation of separate blocks in the reconstructed image of a 3-dimensional object adequately when processing 3-dimensional CT data obtained from the 3-dimensional object.

In order to achieve the above-mentioned objects, the invention as claimed in claim 1 provides an image processing method which processes 3-dimensional CT data obtained from a 3-dimensional object composed of a single block, the image processing method comprising: a start point setting step of setting a start point of continuity in the 3-dimensional CT data to the single block; and a continuity detecting step of detecting the 3-dimensional CT data having continuity with the start point set in the start point setting step, wherein the 3-dimensional CT data are rearranged based on the 3-dimensional CT data having the continuity detected in the continuity detecting step.

In order to achieve the above-mentioned objects, the invention as claimed in claim 2 provides an image processing method which processes 3-dimensional CT data obtained from a 3-dimensional object composed of a plurality of blocks in a predetermined area of the 3-dimensional object, the image processing method comprising: a start point setting step of setting, for each of the plurality of blocks, a start point of continuity in the 3-dimensional CT data to the block concerned; and a continuity detecting step of detecting, for each of the plurality of blocks, the 3-dimensional CT data having continuity with the start point set in the start point setting step, wherein the 3-dimensional CT data are rearranged based on the 3-dimensional CT data having the continuity detected in the continuity detecting step.

In order to achieve the above-mentioned objects, the invention as claimed in claim 5 provides a computer-readable recording medium in which an image processing program embodied therein for causing a computer to execute the image processing method according to any of claims 1 to 4 is recorded.

### EFFECTS OF THE INVENTION

According to the present invention, it is possible to provide an image processing method and a computer-readable recording medium in which an image processing program is recorded which can perform separation of separate blocks in the reconstructed image of a 3-dimensional object adequately in the processing of the 3-dimensional CT data value obtained from the 3-dimensional object.

### BRIEF DESCRIPTION OF THE DRAWINGS

FIG. 1 is a diagram for explaining the processing of a conventional image processing method.
FIG. 2 is a diagram showing a plurality of regular polyhedrons.
FIG. 3 is a diagram for explaining an example of the 3DX device in which the image processing method of the invention is embodied.
FIG. 4 is a diagram for explaining the 3-dimensional projection data.
FIG. 5 is a flowchart for explaining the image processing method in which floating noise components are eliminated from the 3-dimensional CT data value obtained from the 3-dimensional object.
FIG. 6 is a diagram for explaining the detection of a continuity of the image.
FIG. 7 is a diagram showing an image before floating noise components are eliminated and an image after the floating noise components are eliminated.
FIG. 8 is a diagram showing several images after floating noise components are eliminated.

### DESCRIPTION OF REFERENCE NUMERALS

- 1: 3DX device
- 11: Radiation Source
- 12: Detector
- 13: Analog-to-digital Converter
- 14: General-purpose Computer
- 21: Object for Image Pickup

### BEST MODE FOR CARRYING OUT THE INVENTION

A description will now be given of the embodiments of the invention with reference to the accompanying drawings.

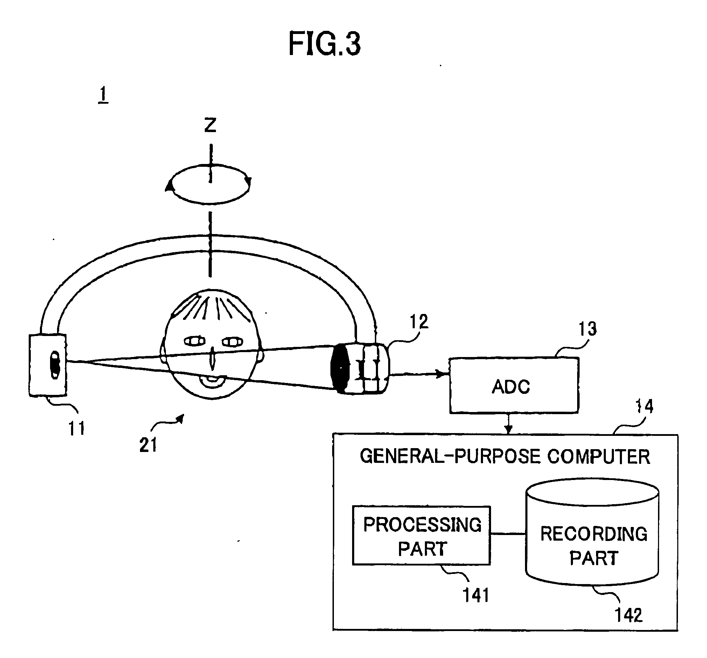

FIG. 3 shows an example of the 3DX device (3DX Multi Image Micro CT Radiography) in which the image processing method of the invention is embodied.

The imaging device 1 is the 3DX device which comprises a radiation (X-ray) source 11, a detector 12, an analog-to-digital converter 13, and a general-purpose computer 14. The radiation source 11 emits a radiation (X-ray), and the radiation emitted from the radiation source 11 is irradiated to the object 21 for image pickup. The radiation emitted from the radiation source 11 passes through the object 21 and inputs to the detector (image intensifier) 12. The detector 12 outputs a detection signal proportional to the intensity of the input radiation.

The general-purpose computer 14 includes a processing part 141 and a recording part 142. In the recording part 142, the image processing program embodied therein for causing the computer to execute the image processing method of the invention is recorded. The processing part 141 is configured to carry out the data processing of data obtained from the analog-to-digital converter 13 in accordance with the image processing program. In addition, the image processing program recorded in the recording medium, such as CD-ROM, CD-R or FDD, may be installed in the recording part 142 of the general-purpose computer 14.

Alternatively, the processing by the analog-to-digital converter 13 may be performed by the processing part 141 of the general-purpose computer 14. In that case, the analog-to-digital converter 13 may be omitted.

The radiation source 11 and the detector 12 are disposed on both sides of the object 21 so as to confront each other, and they are rotated by one revolution around the Z-axis (or the perpendicular line passing through the center of the object) so that a total of 512 pieces of projection data of the object are collected from directions of 360 degrees. The detection signal (analog signal) detected by the detector 12 is supplied to the analog-to-digital converter 13 and converted into digital data. The digital data obtained by the analog-to-digital converter 13 is supplied to the general-purpose computer 14, and the computer 14 performs an image processing of the digital data so that the 3-dimensional image data of the object 21 can be obtained.

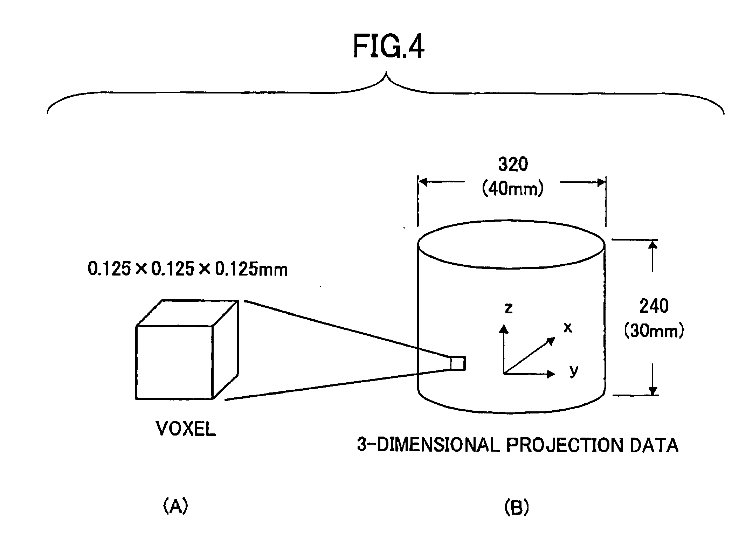

The 3-dimensional projection data obtained by the 3DX device has a pillar type image formation area with the height of 30 mm and the diameter of 40 mm as shown in FIG. 4 (B). Since one voxel is 0.125 x 0.125 x 0.125 as shown in FIG. 4 (A), the pillar type image formation area shown in FIG. 4 (B) includes voxels of 240 x π x (320/2)² in total.

### (Elimination of Floating Noises)

In the neighborhood of an object in the constructed 3-dimensional image, the floating noise components arise under the influence of soft tissue.

In order to eliminate the floating noise components, it is necessary to detect eliminates looking continuity in the up/down direction.

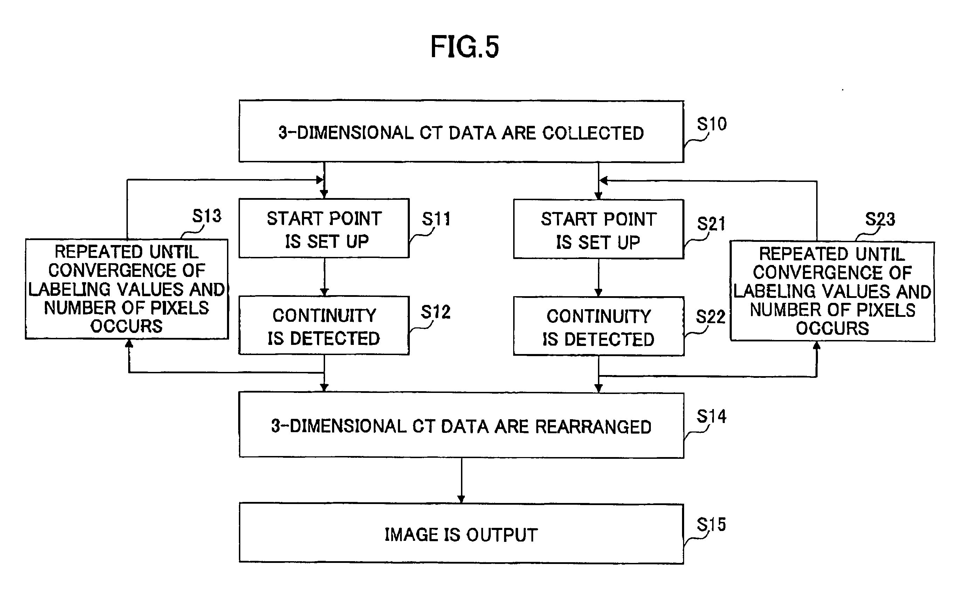

FIG. 5 is a flowchart for explaining the image processing method in which the floating noise components are eliminated from the 3-dimensional CT data obtained from the 3-dimensional object.

First, the 3DX device collects the 3-dimensional CT data by rotating the 3-dimensional object around a predetermined axis by one revolution (S10).

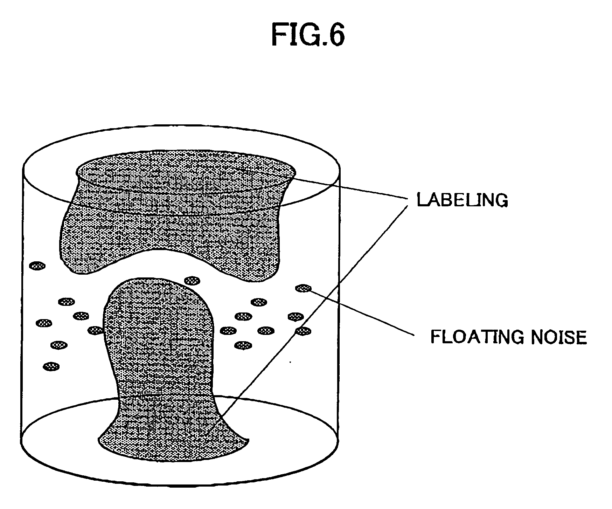

Subsequently, in the 3-dimensional CT data obtained from the 3-dimensional object, continuity of the image is detected from the lower part and the upper part of the image area.
(1) A start point is set up to a pixel which is in contact with the bottom of the image area, and labeling to the pixel is performed (S11). Next, the control is transferred to pixels in the one-step higher array and labeling is performed also to a pixel which is in contact with the previous pixel to which labeling is already preformed. The same processing is performed until the top of the image area is reached (S12).
   The processing of step S11 and step S12 is repeated, while the number of pixels to which labeling is performed is counted, until convergence of labeling values and the number of pixels occurs (S13).
   In the processing of step S11 and step S12, labeling to the pixels which are in contact with the bottom is performed, and subsequently labeling is performed to the pixels in the one-step higher array. The labeling is carried out per surface. In the case of the object having a reverse U character configuration (or when the object is in an overhanging configuration), the detection of continuity in the whole 3-dimensional CT data by performing the processing only one time is impossible. For this reason, the number of pixels to which labeling is performed is counted, and the processing is repeated until convergence occurs.
(2) A start point is set up to a pixel which is in contact with the top of the image area and labeling to the pixel is performed (S21). Next, the control is transferred to pixels in the one-step lower array and labeling is performed also to a pixel which is in contact with the previous pixel to which labeling is already preformed. The same processing is performed until the bottom of the image area is reached (S22).
   The processing of step S21 and step S22 is repeated, while the number of pixels to which labeling is performed is counted, until convergence of labeling values and the number of pixels occurs (S23).
   As a result, labeling is performed to the pixels corresponding to a mandibular condyle head or a mandibular fossa, and labeling is not performed to the floating noise components as shown in FIG. 6.
(3) Finally, the whole image is checked, the pixel value = 0 (black) is inputted to the pixels to which labeling is not performed, and the 3-dimensional CT data are rearranged (S14).

Then, the corrected image is outputted using the rearranged 3-dimensional CT data (S15).

In the above-mentioned embodiment, labeling is started from the pixel which is in contact with the bottom of the image area and the pixel which is in contact with the top of the image area. The present invention is not limited to this embodiment. Alternatively, the setting of a start point may be set up to the side or the internal part of the image area.

In the above-mentioned embodiment, labeling is performed per surface. Alternatively, labeling may be performed per point or per a given volume. In addition, the labeling may be performed in a recursive manner. In such a case, the number of times of the processing of step S13 and step S23 can be reduced. Depending on the case, the processing of step S13 and step S23 can be omitted.

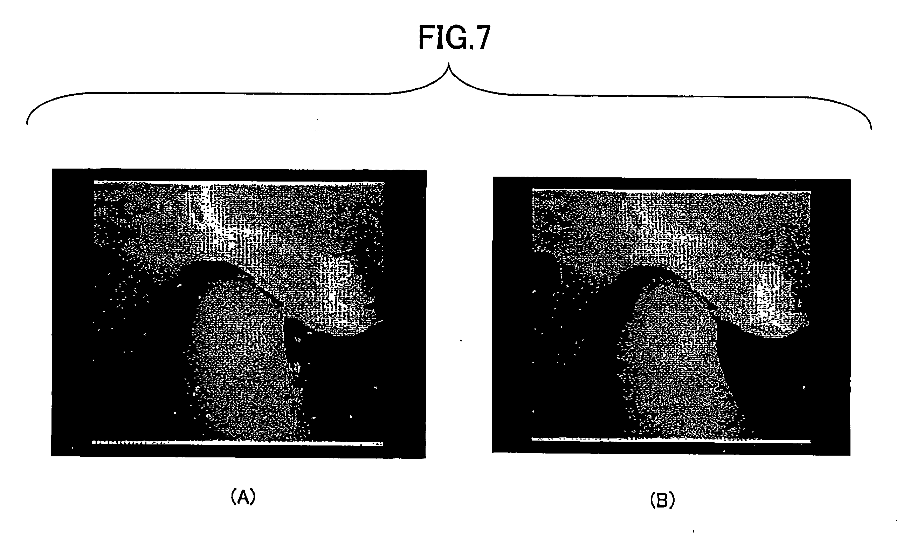

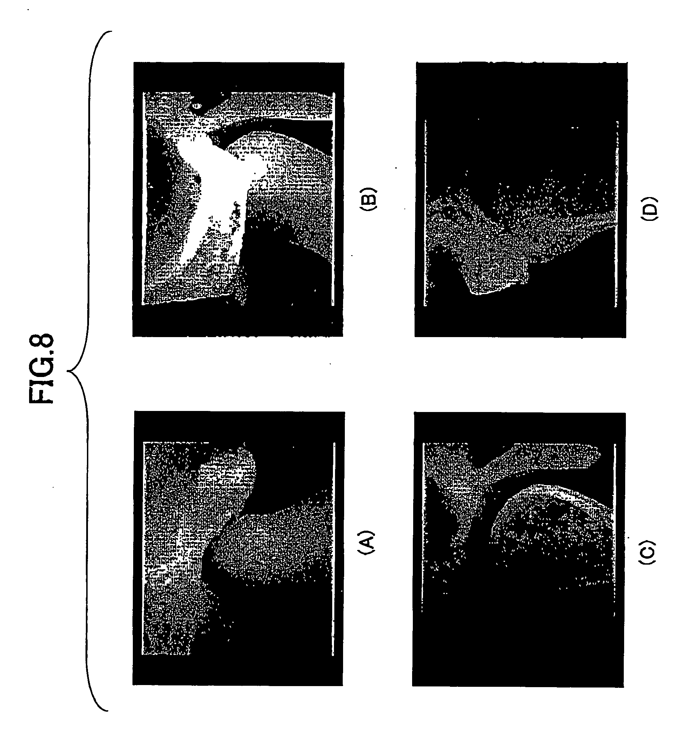

An image before the elimination of the floating noise components is shown in FIG. 7 (A), and an image after the elimination of the floating noise components is shown in FIG. 7 (B). Several images after the elimination of the floating noise components when viewed from several directions are shown in FIG. 8.

The image processing method of the present invention is applicable to not only the dental field but also 3-dimensional CT data obtained from a 3-dimensional object which is composed of a plurality of blocks in a predetermined area.

Based on the above-mentioned embodiment, the improvement in accuracy of dimensions of a 3-dimensional image and the repeatability of an object have been examined. As a result, separation of a mandibular condyle head and a mandibular fossa, which is conventionally difficult to attain, can be realized, and it is expected that use of image processing method of the present invention will be extended to clinical applications. The image processing method of the present invention is also applicable to construction of a practical model using finite-element analysis, optical modeling, etc. using this 3-dimensional image.

### APPLICABILITY OF THE INVENTION

This invention is applicable to limited cone-beam X-ray CT devices for dental and head/neck part uses or the like.

## Claims

1. An image processing method which processes 3-dimensional CT data obtained from a 3-dimensional object composed of a single block, the image processing method comprising:
a start point setting step of setting a start point of continuity in the 3-dimensional CT data to the single block; and
a continuity detecting step of detecting the 3-dimensional CT data having continuity with the start point set in the start point setting step,
wherein the 3-dimensional CT data are rearranged based on the 3-dimensional CT data having the continuity detected in the continuity detecting step.

2. An image processing method which processes 3-dimensional CT data obtained from a 3-dimensional object composed of a plurality of blocks in a predetermined area of the 3-dimensional object, the image processing method comprising:
a start point setting step of setting, for each of the plurality of blocks, a start point of continuity in the 3-dimensional CT data to the block concerned; and
a continuity detecting step of detecting, for each of the plurality of blocks, the 3-dimensional CT data having continuity with the start point set in the start point setting step,
wherein the 3-dimensional CT data are rearranged based on the 3-dimensional CT data having the continuity detected in the continuity detecting step.

3. An image processing method according to claim 1 or 2 wherein the detection of continuity in the continuity detecting step is performed per surface or per point.

4. An image processing method according to claim 2 or 3 wherein the predetermined area is a jaw joint part, and the plurality of blocks include a mandibular condyle head and a mandibular fossa.

5. A computer-readable recording medium in which an image processing program embodied therein for causing a computer to execute the image processing method according to any of claims 1 to 4 is recorded.

## Amended claims

### Amended claims under Art. 19.1 PCT

**1.** (Amended) An image processing method which processes 3-dimensional CT data obtained from a 3-dimensional object and being 3-dimensional voxel data, the 3-dimensional object composed of a single block, the image processing method comprising:
a start point setting step of setting a start point of continuity in the 3-dimensional CT data to the single block; and
a continuity detecting step of detecting the 3-dimensional CT data having continuity with the start point set in the start point setting step,
wherein the 3-dimensional CT data are rearranged based on the 3-dimensional CT data having the continuity detected in the continuity detecting step.

**2.** (Amended) An image processing method which processes 3-dimensional CT data obtained from a 3-dimensional object and being 3-dimensional voxel data, the 3-dimensional object composed of a plurality of blocks in a predetermined area of the 3-dimensional object, the image processing method comprising:
a start point setting step of setting, for each of the plurality of blocks, a start point of continuity in the 3-dimensional CT data to the block concerned; and
a continuity detecting step of detecting, for each of the plurality of blocks, the 3-dimensional CT data having continuity with the start point set in the start point setting step,
wherein the 3-dimensional CT data are rearranged based on the 3-dimensional CT data having the continuity detected in the continuity detecting step.

**3.** An image processing method according to claim

With respect to International Application No. PCT/JP2004/010619, filed on July 26, 2004, the applicant canceled sheet 15 of the Description entirely and submitted substitute sheets 15-1 and 15-2 which are attached hereto. The phrase "3-dimensional CT data obtained from a 3-dimensional object" in claims 1 and 2 is changed to "3-dimensional CT data obtained from a 3-dimensional object and being 3-dimensional voxel data" based on page 3, lines 1-4, in the Description, in order to clarify that 3-dimensional CT data obtained from a 3-diensional object are 3-dimensional voxel data.
